# EUROPEAN PATENT APPLICATION

(11) **EP 0 851 675 A2**
(43) Date of publication of application: **01.07.1998**
(21) Application number: 97204043.0
(22) Date of filing: 19.12.1997
(51) Int. Cl.: H04N 5/232

(54) **Method and apparatus for automatically determining the orientation of a digital camera**

(30) Priority: 30.12.1996 US 773941
(71) Applicant: Bayer Corporation, Pittsburgh, PA 15219-2502 (US)
(72) Inventor: Omvik, John, North Andover, 01845 (US)
(74) Representative: Ramon, Charles Lucien

(57) **Abstract**

An apparatus (30) for automatically determining the orientation of a digital camera (20) while a picture is being taken, and for storing the captured digital image (36) in memory (34) according to the orientation of the camera, such that the digital image is displayed (10) in the correct orientation when viewed using an image manipulation program. The apparatus (30) includes a switch device (32) for sensing the orientation of the digital camera (20), circuitry for supporting the operation of the switch, and software for writing the data corresponding to a captured digital image (36) to memory (34) in the correct orientation based on the output (46) of the switch device.

## Description

### FIELD OF THE INVENTION

The present invention relates in general to digital cameras. More specifically, the present invention provides an apparatus for determining the orientation (i.e., landscape or portrait) of a digital camera to facilitate the viewing and manipulation of digital images captured by the camera.

### BACKGROUND OF THE INVENTION

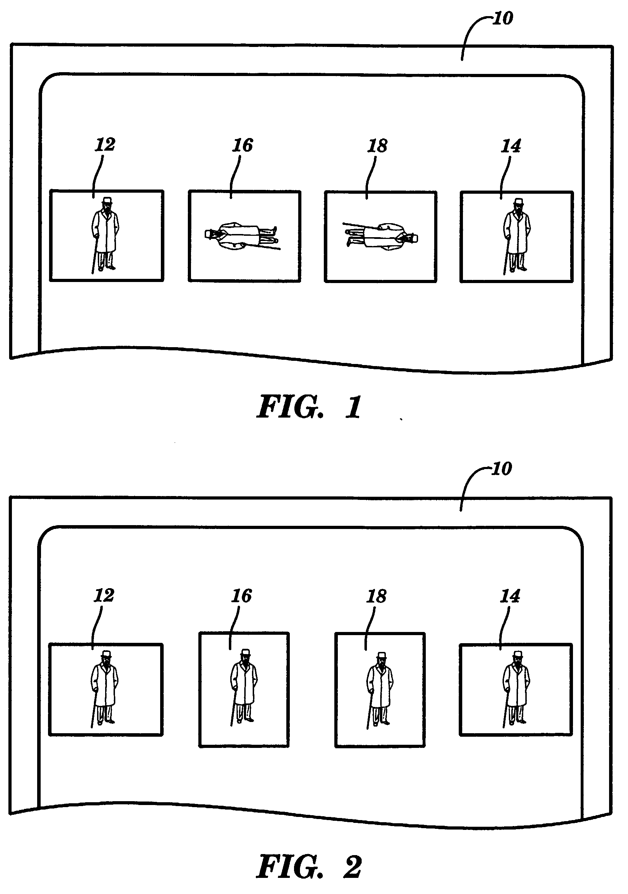

Digital images captured by a digital camera are traditionally initially displayed in a landscape (horizontal) orientation when viewed with an image manipulation software program, regardless of the original scene orientation. Consequently, images taken in a portrait (vertical) orientation are displayed in a landscape orientation, and must be rotated ± ninety (90) degrees in a post processing step in order to be viewed and used in the proper orientation. An example of this problem is illustrated in FIG. 1. Several images captured by a digital camera, such as the ePhoto 307™ digital camera available from the Agfa Division of Bayer Corporation, have been downloaded from the digital camera and displayed in a thumbnail view by an image manipulation program. In this example, the captured digital images are displayed using the PhotoWise™ image manipulation software which is bundled together with the ephoto 307™ digital camera.

As shown in FIG. 1, several of the digital images 12, 14, are displayed on a computer display 10 by an image manipulation program in the original orientation in which they were captured. These images are in the correct orientation and can be manipulated as desired without having to undergo the time consuming step of a ninety degree rotation. The remaining digital images 16, 18, each originally captured in a portrait orientation, are displayed in a landscape view. When displayed in this manner, the details of the images are difficult to visualize, requiring a user to rotate each of the images 16, 18 ± ninety degrees in a post processing step. FIG. 2 illustrates the digital images after rotation. Depending on the size and/or resolution of theses images, the rotation step may require a substantial amount of time to complete.

### SUMMARY OF THE INVENTION

The present invention solves this problem by providing an apparatus for automatically determining the orientation of a digital camera while a picture is being taken, and for storing the captured digital image in memory according to the orientation of the camera, such that the digital image is displayed in the correct orientation when viewed. The preferred embodiment of the apparatus of the present invention includes a switch device for automatically sensing the orientation of the digital camera, circuitry for supporting the operation of the switch, and software for writing the data corresponding to a captured digital image to memory in the correct orientation based on the output of the switch device. In an alternative embodiment of the present invention, one or more manually actuated switches, disposed on the body of the digital camera, can be used by an operator to manually designate the orientation in which the image data is stored in memory.

### BRIEF DESCRIPTION OF THE DRAWINGS

The features of the present invention will best be understood from a detailed description of the invention and a preferred embodiment thereof selected for the purposes of illustration and shown in the accompanying drawings in which:
FIG. 1 illustrates the manner in which digital images captured by a digital camera are currently displayed in a typical image manipulation software program;
FIG. 2 illustrates the digital images of FIG. 1 after the rotation of those digital images originally captured in a portrait orientation, but displayed in the landscape orientation, back to the correct portrait orientation;
FIG. 3 shows a digital camera positioned to capture an image in a landscape orientation;
FIGS. 4 and 5 show a digital camera positioned to capture an image in a portrait orientation;
FIG. 6 illustrates an apparatus in accordance the present invention;
FIG. 7 is a digital image captured in a landscape orientation at a hypothetical resolution of 3x2 pixels;
FIG. 8 illustrates the storage of the 3x2 pixel landscape image of FIG. 7 in memory;
FIG. 9 is a 2x3 digital image captured in a portrait orientation but displayed in a landscape orientation;
FIGS. 10 and 11 illustrate the 2x3 portrait image of FIG. 9 displayed in the correct portrait orientation; and
FIGS. 12 and 13 illustrate the storage of the 2x3 portrait images shown in FIGS. 10 and 11, respectively, in memory.

### DETAILED DESCRIPTION OF THE INVENTION

The objects, features, and advantages of the present invention are illustrated in detail in
the accompanying drawings, wherein like reference numerals refer to like elements
throughout the drawings.

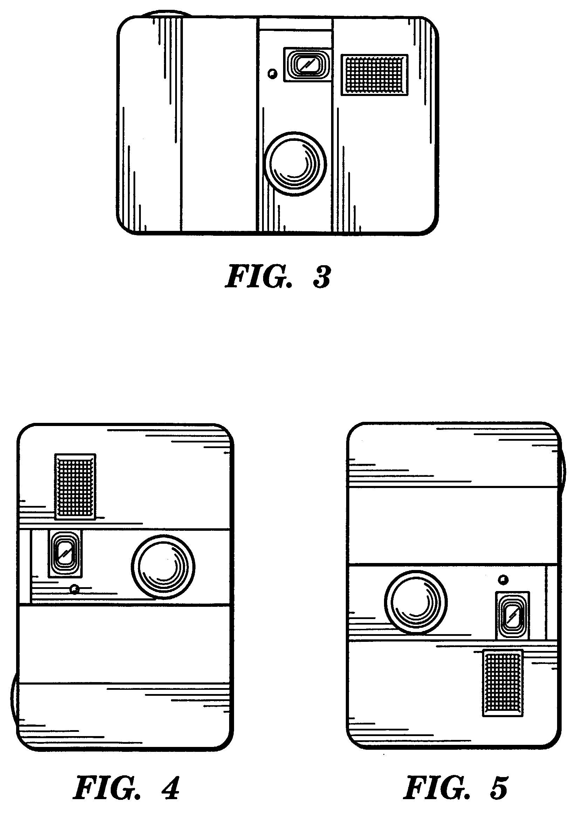

FIG. 3 shows a conventional digital camera 20 positioned to capture an image in a landscape orientation. The digital images 12, 14 illustrated in FIG. 1 were captured in this manner. Similarly, the digital images 16, 18 were captured by positioning the digital camera 20 in a portrait orientation as illustrated in FIGS. 4 and 5, respectively.

Each captured digital image is stored in a landscape orientation in the camera's internal memory, on a removable storage device associated with the camera, or directly in a computer tethered to the camera, regardless of the orientation of the digital camera during the capture of a scene. This is due to the manner in which the pixel data is accessed from the CCD sensor of the digital camera. The operation of digital cameras is described in greater detail in an Agfa publication entitled "A Guide To Digital Photography, Theory And Basics", 1996, published by Agfa-Gevaert N.V., Mortsel, Belgium, incorporated herein by reference.

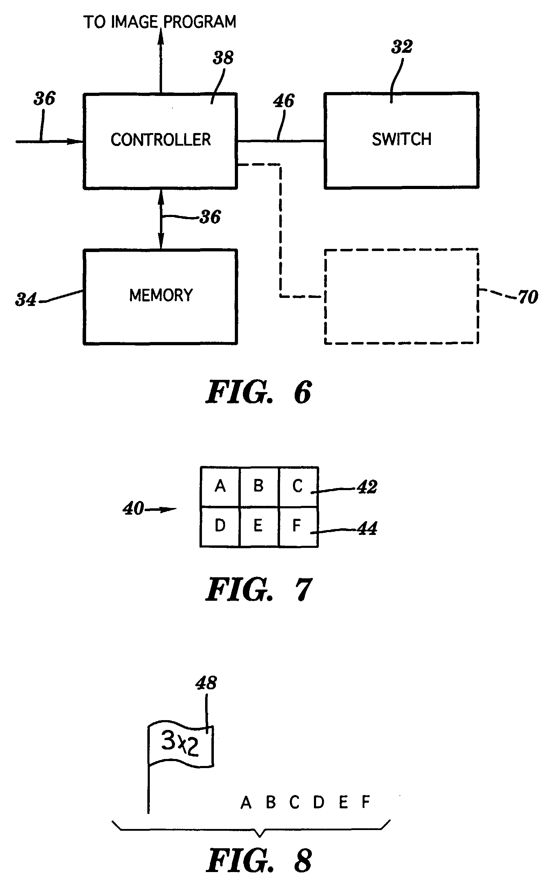

The present invention, illustrated in FIG. 6, provides an apparatus for determining the orientation of a digital camera, and, if necessary, for rotationally transforming the captured digital image such that it is displayed in the proper format when processed by an image manipulation program.

The digital camera orientation apparatus of the present invention, generally designated as 30 in FIG. 6, includes an orientation switch 32 for determining the orientation of the digital camera, a memory 34 for storing the digital image data 36 captured by the digital camera, and a controller 38 for controlling the storage of the digital image data 36 in the memory 34 according to the output of the orientation switch 32. The controller 38 also coordinates the transfer of digital image data from the memory 34 to an image manipulation program operating on a computer. The controller 38 can be implemented in any manner known in the art.

In the preferred embodiment of the present invention, the orientation switch 32 is implemented using a pendulum-type switch which uses gravity to automatically sense the orientation (portrait or landscape) of the digital camera. Switches of this type are disclosed, for example, in U.S. Patent No. 4,183,645, U.S. Patent No. 4,801,793, and U.S. Patent No. 5,541,697, incorporated herein by reference. Of course, other types of switches for determining the orientation of the digital camera can be used without departing from the scope of the present invention. For example, a manually actuated switch 70 (or a plurality thereof), disposed on the body of the digital camera, can be used by an operator to manually designate the orientation in which the image data is stored in memory, displayed by an image manipulation program on a computer display, or displayed on the built-in (or attachable) LCD display of the camera itself. The switch 70 can be used in lieu of, or in combination with, the orientation switch 32.
When a digital image is captured in a landscape orientation, the controller 38 stores the
digital image data 36 corresponding thereto in the memory 34 in a conventional manner.
When a digital image is captured in a portrait orientation, however, the controller 38 stores the digital data in such a way that its original orientation is maintained when accessed by an image manipulation program, without the manual post-processing rotation step required in the prior art.

A simple example will illustrate the storage of the digital image data 36 in the memory 34 for a digital image captured in landscape and portrait orientations. In this example, a digital image captured at a hypothetical resolution of 3x2 pixels is stored in the memory 34 such that the original orientation of the image is maintained. The method used in this example can be easily extrapolated for use in the storage of an actual digital image which has a much higher resolution (e.g., 32Ox240 or 64Ox480 pixels). It should be noted, however, that storage method disclosed below is only one of many possible methods for the storage of the digital image data 36 in the memory 34. Other storage methods can be used without departing from the scope of the present invention.

The digital image data 40 for a digital image captured in a landscape orientation at a resolution of 3x2 pixels is displayed by an image manipulation program as illustrated in FIG. 7. The data 40 comprises a matrix having a first row 42 including pixel data A, B, and C, and a second row 44 including pixel data D, E, and F. As known in the art, the pixel data for a given pixel X typically includes three color components Xr, Xg, and Xb, corresponding to red, green and blue data, respectively.

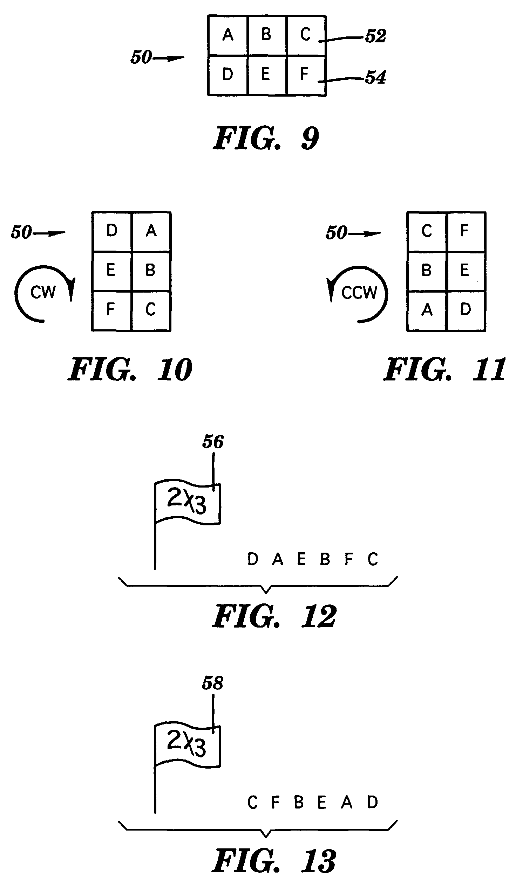

When the orientation switch 32 outputs an orientation signal 46 to the controller 38 indicating that the digital image was captured in the landscape orientation, the data 40 is stored in the memory 34 by the controller 38 as shown in FIG. 8. A landscape image flag 48 indicates that the image was captured in the landscape orientation at a resolution of 3x2 pixels. A block of data including the pixel data A, B, C, D, E, and F follows the landscape image flag 48. When this data is accessed from the memory 34 by an image manipulation program, the landscape image flag 48 is used to separate the pixel data into first and second segments A, B and C, and D, E, and F, respectively, such that it can be displayed as shown in FIG. 7. The separation of the pixel data can be performed by the controller 38 or by the image manipulation program upon receipt of the data. The digital image data 50 for a digital image captured in a portrait orientation at a
resolution of 2x3 pixels is output by a conventional digital camera in the landscape orientation shown in FIG. 9. The digital data 50 comprises a 3x2 matrix including a first row 52 including pixel data A, B, and C, and a second row 54 including pixel data D, E, and F. In the correct portrait orientation, however, the data should be arranged as shown in either FIG. 10 or FIG. 11, depending upon whether the digital camera was rotated clockwise (directional arrow CW) or counterclockwise (directional arrow CCW) from the landscape to a portrait orientation.

Upon receipt of an orientation signal 46 from the orientation switch 32 indicating that a digital image was captured in a portrait orientation, the controller 38 rotationally transforms the data prior to its storage in the memory 34. The orientation signal 46 provides the controller 38 with a first portrait image flag 56, indicating that the digital image was captured in the portrait orientation of FIG. 4, or a second portrait image flag 58, indicating that the digital image was captured in the portrait orientation of FIG. 5.

The data illustrated in FIG. 10 is stored in the memory 34 as shown in FIG. 12. The portrait image flag 56 indicates that the image was captured in the portrait orientation of FIG. 4 at a resolution of 2x3 pixels. A block of rotationally transformed data including the pixel data D, A, E, B, F and C, follows the portrait image flag 56. When this data is accessed from the memory 34 by an image manipulation program, the controller 38 uses the portrait image flag 56 to separate the pixel data into a first segment D, A, a second segment E, B, and a third segment F, C, such that it can be displayed as shown in FIG. 10. Again, the separation of the pixel data can be performed by the controller 38 or by the image manipulation program upon receipt of the data. The data illustrated in FIG. 1 is stored in the memory 34 in a similar manner as shown in FIG. 13.
In the preferred embodiment of the present invention, the rotational transformation of
the digital image data corresponding to an image captured in a portrait orientation is performed by the controller 38 prior to the storage of the digital data 36 in the memory 34. In an alternate embodiment of the present invention, however, the controller 38 stores a portrait image flag 56 or 58, and an untransformed block of digital data (pixel data A, B, C, D, E, and F), in the memory 34. The rotational transformation is performed by the controller 38 or the image manipulation program after the data is accessed from the memory 34. This process is automatic and does not require any user actuated post processing rotation steps. The foregoing description of the present invention has been presented for purposes of illustration and description. It is not intended to be exhaustive or to limit the invention to the precise form disclosed, and obviously many modifications and variations are possible in light of the above teaching. For example, the orientation determining system of the present invention can be used to automatically provide and/or display digital data captured by a digital video camera in the correct orientation. Such modifications and variations that may be apparent to a person skilled in the art are intended to be included within the scope of this invention as defined by the accompanying claims.

## Claims

1. An imaging system for capturing a digital image including: an apparatus for determining an orientation (30) of said imaging system during capture of a digital image (36), and for automatically providing said digital image in said determined orientation.

2. The imaging system according to claim 1, further including: a display (10) for displaying said digital image (36) in said determined orientation.

3. The imaging system according to claim 1, further including: memory (34) for storing said digital image.

4. The imaging system according to claim 3, further including: a controller (38) for storing said digital image (36) in said memory (34) in said determined orientation.

5. The imaging system according to claim 3, further including: a controller (38) for storing said digital image (36) and an orientation signal (46) identifying the determined orientation of said imaging system in said memory (34), and for outputting said digital image from said memory in said determined orientation based on said orientation signal.

6. The imaging system according to claim 5, wherein said orientation signal (46) is provided by an orientation switch (32).

7. The imaging system according to claim 6, wherein said orientation switch (32) discriminates between a finite number of possible orientations of said imaging system.

8. The imaging system according to claim 6, wherein said orientation switch (32) discriminates between an image captured in a landscape orientation (40) and an image captured in a portrait orientation (50).

9. The imaging system according to claim 8, wherein said imaging system is a digital camera (20).

10. The imaging system according to claim 1, wherein said imaging system is a digital camera (20).

11. A method for use with a digital camera (20), comprising the steps of: determining an orientation (30) of said digital camera during capture of a digital image (36); and, automatically providing said digital image in said determined orientation.

12. The method of claim 11, further including the step of : automatically displaying (10) said digital image (36) in said determined orientation.

13. The method of claim 11, further including the steps of: capturing said digital image in a landscape orientation (40); and,automatically providing said digital image in said landscape orientation.

14. The method of claim 11, further including the steps of: capturing said digital image in a portrait orientation (50); and,automatically providing said digital image in said portrait orientation.

15. The method of claim 11, further including the steps of: storing said digital image (36) in memory (34) in a predetermined orientation;
automatically transforming said stored digital image to said determined orientation; and,
providing said digital image in said determined orientation.
